# EUROPEAN PATENT APPLICATION

(11) **EP 4 756 884 A1**
(43) Date of publication of application: **10.06.2026**
(21) Application number: 25187917.7
(22) Date of filing: 07.07.2025
(51) Int. Cl.: H01M 4/04, H01M 10/0525

(54) **ELECTRODE MANUFACTURING DEVICE AND METHOD OF MANUFACTURING ELECTRODE USING THE SAME**

(30) Priority: 05.12.2024 KR 20240179728
(71) Applicant: SAMSUNG SDI CO., LTD., Yongin-si, Gyeonggi-do 17084 (KR)
(72) Inventor: LEE, Jun Sub, 16678 Suwon-si, Gyeonggi-do (KR); JUN, Pil Goo, 16678 Suwon-si, Gyeonggi-do (KR)
(74) Representative: Michalski Hüttermann & Partner mbB

(57) **Abstract**

An electrode manufacturing device includes a rolling part configured to roll an electrode plate, a roundness measurement part on the rolling part, the roundness measurement part configured to measure a roundness of each of a pair of rolling rollers, a thickness measurement part behind the rolling part, the thickness measurement part configured to measure a thickness of the electrode plate, and a distance adjustment part configured to compare a measurement value of the thickness measurement part with a measurement value of the roundness measurement part to adjust a distance between the pair of rolling rollers.

## Description

### BACKGROUND

### 1. Field

Embodiments relate to an electrode manufacturing device and a method of manufacturing an electrode using the same.

### 2. Description of the Related Art

In general, the demand for secondary batteries with high energy density and capacity has recently dramatically increased according to the rapid supply of electronic apparatuses using batteries, such as portable phones, notebook computers, and electric vehicles. Accordingly, research and development for improving performance of lithium secondary batteries are actively being conducted.

A lithium secondary battery is a battery which includes a positive electrode and a negative electrode including active materials capable of intercalation and deintercalation of lithium ions and electrolytes and produces electric energy through oxidation and reduction reactions when lithium ions are intercalated/deintercalated at the positive electrode and negative electrode.

A surface of a thin metal film (foil) formed of aluminum or copper is coated with an electrode material capable of transferring electrons to manufacture a secondary battery including lithium ions and the like. An electrode of the secondary battery includes a non-coated portion which is not coated with the electrode material which functions as a terminal part. That is, the electrode includes the non-coated portion in which the foil is not coated with the electrode material and a coated portion which extends from the non-coated portion in a first direction and in which the foil is coated with the electrode material.

The above information disclosed in this Background section is provided for enhancement of understanding of the background of the present disclosure, and, therefore, it may contain information that does not constitute related (or prior) art.

### SUMMARY

Embodiments include an electrode manufacturing device, including a rolling part comprising a pair of rolling rollers and configured to roll an electrode plate and move the electrode plate in a positive X-axis direction; the rolling rollers being further configured to press the electrode plate in a Z-axis direction perpendicular to the X-axis, a roundness measurement part on the rolling part, the roundness measurement part configured to measure a roundness of each of a pair of rolling rollers, a thickness measurement part with respect to the positive X-axis direction behind the rolling part, the thickness measurement part configured to measure a thickness of the electrode plate, and a distance adjustment part configured to compare a measurement value of the thickness measurement part with a measurement value of the roundness measurement part and further configured to adjust a distance between the pair of rolling rollers.

The roundness measurement part may include a plurality of displacement sensors, and the plurality of displacement sensors may face a rolling gap between the pair of rolling rollers.

The plurality of displacement sensors may be installed at a left side, a central portion, and a right side of each of the pair of rolling rollers in a longitudinal direction thereof.

The roundness measurement part may include an encoder configured to measure a position of each of the pair of rolling rollers in a circumferential direction thereof.

The thickness measurement part may include a measurement roller supporting a lower portion of the electrode plate, the measurement roller configured to guide the electrode plate, and a thickness sensor above the measurement roller, the thickness sensor configured to measure a left-right thickness of the electrode plate in a width direction thereof.

The thickness sensor may be movable in the width direction of the electrode plate.

The distance adjustment part may include an upper driver configured to control a position of an upper rolling roller of the pair of rolling rollers, a lower driver configured to control a position of a lower rolling roller of the pair of rolling rollers, and a controller configured to match a measurement value of the thickness measurement part with a measurement value of the roundness measurement part to control the upper driver and the lower driver.

The distance adjustment part may include a housing, a first pressing frame vertically movable in the housing, the upper rolling roller being rotatable on the first pressing frame, and a second pressing frame under the first pressing frame, the lower rolling roller being rotatable on the second pressing frame.

The upper driver may include a screw coupled to the first pressing frame to move the first pressing frame to change the position of the upper rolling roller.

The lower driver may include a pressing cylinder coupled to the second pressing frame to move the second pressing frame to change the position of the lower rolling roller.

The distance adjustment part may include a bending correction part configured to adjust bending of the upper rolling roller and the lower rolling roller.

The bending correction part may be at both edges of the upper rolling roller and both edges of the lower rolling roller, the bending correction part being configured to provide a reverse pressure in a direction opposite to a pressing direction of each of the upper rolling roller and the lower rolling roller.

The bending correction part may include a first reverse pressure frame on an edge of the upper rolling roller, a first reverse pressure cylinder between the first reverse pressure frame and the housing, the first reverse pressure cylinder configured to provide a reverse pressure in a direction opposite to a pressing direction of the upper driver, a second reverse pressure frame provided on an edge of the lower rolling roller, and a second reverse pressure cylinder between the second reverse pressure frame and the housing, the second reverse pressure cylinder configured to provide a reverse pressure in a direction opposite to a pressing direction of the lower driver.

The bending correction part may include a first reverse pressure frame on an edge of the upper rolling roller, a second reverse pressure frame on an edge of the lower rolling roller, and a reverse pressure cylinder between the first reverse pressure frame and the second reverse pressure frame, the reverse pressure cylinder configured to provide a pressing force to the first reverse pressure frame and the second reverse pressure frame in directions opposite to each other.

Embodiments include a method of manufacturing an electrode, the method including measuring a roundness of a rolling roller to obtain a profile, rolling, by the rolling roller, an electrode plate, resulting in a rolled electrode plate, measuring a thickness of the rolled electrode plate, comparing a thickness measurement value of the electrode plate with a roundness measurement value of the rolling roller, and after comparing the thickness of the electrode plate, adjusting a gap of the rolling roller based on a difference value.

Measuring the thickness of the rolled electrode plate may be synchronized with a zero-point trigger signal of an encoder of the rolling roller.

Measuring the thickness of the rolled electrode plate includes dividing the electrode plate into a plurality of zones in a width direction, measuring a thickness value in each zone of the plurality of zones, and measuring a difference between an average value in an edge zone of the plurality of zones of the electrode plate and an average value in a central zone of the plurality of zones of the electrode plate.

Adjusting the gap of the rolling roller may include bending the rolling roller based on a result of the comparing.

Bending the rolling roller may include applying a force in a direction opposite to a pressing direction of the rolling roller to bend the rolling roller in a crown shape.

Bending the rolling roller further may include pressing, by a driver at both edges of the rolling roller, the rolling roller toward the electrode plate, and providing, by a reverse pressure cylinder outside the driver, a hydraulic pressure force in a direction opposite to a pressing direction of the driver.

These and other aspects and features of the present disclosure will be described in or will be apparent from the following description of some embodiments of the present disclosure.

### BRIEF DESCRIPTION OF THE DRAWINGS

Features will become apparent to those of ordinary skill in the art by describing in detail exemplary embodiments with reference to the attached drawings, in which:
FIG. 1 is a schematic view illustrating a configuration of an electrode manufacturing device according to an embodiment of the present disclosure;
FIG. 2 is a schematic plan view illustrating the configuration of the electrode manufacturing device according to an embodiment of the present disclosure;
FIG. 3 is a schematic perspective view illustrating a rolling part of the electrode manufacturing device according to an embodiment of the present disclosure;
FIG. 4 is a schematic cross-sectional view illustrating the rolling part of the electrode manufacturing device according to an embodiment of the present disclosure;
FIG. 5 is a view for describing thickness measurement of the electrode manufacturing device according to an embodiment of the present disclosure;
FIG. 6 is a view illustrating a bending action of the electrode manufacturing device according to an embodiment of the present disclosure;
FIG. 7 is a schematic cross-sectional view illustrating a modified example of a bending correction part of the electrode manufacturing device according to an embodiment of the present disclosure;
FIG. 8 is a view for describing a change in shape of an electrode plate manufactured by the electrode manufacturing device according to an embodiment of the present disclosure;
FIG. 9 is a configuration diagram for a method of manufacturing an electrode according to an embodiment of the present disclosure; and
FIG. 10 is a flowchart illustrating the method of manufacturing an electrode according to an embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

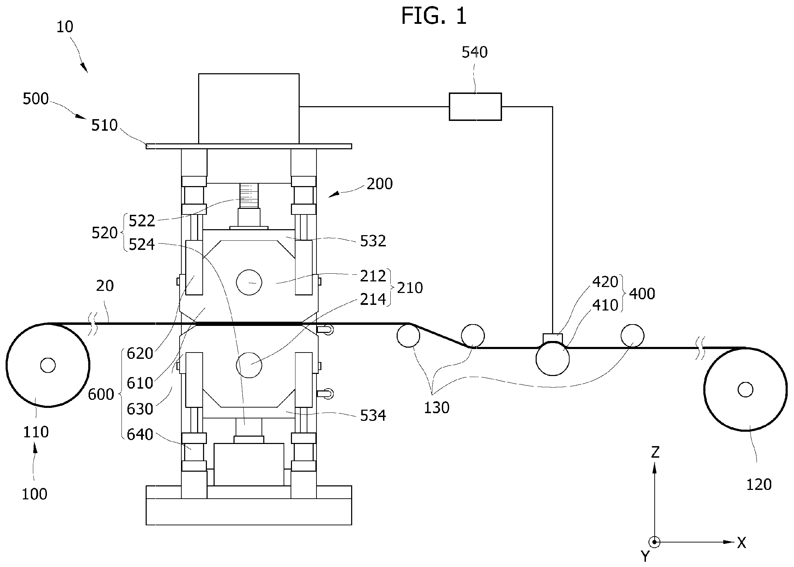

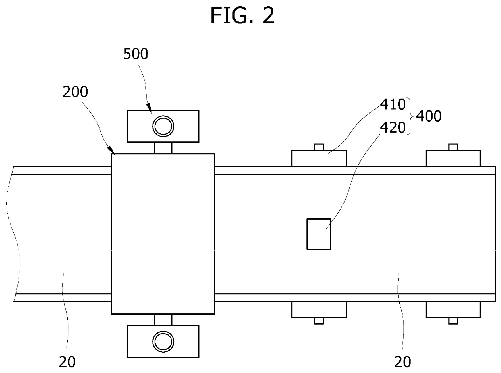

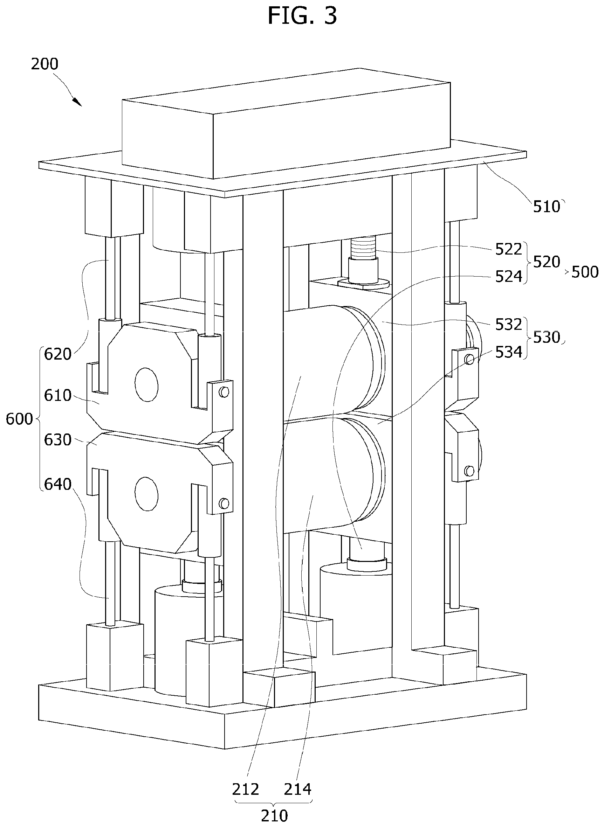

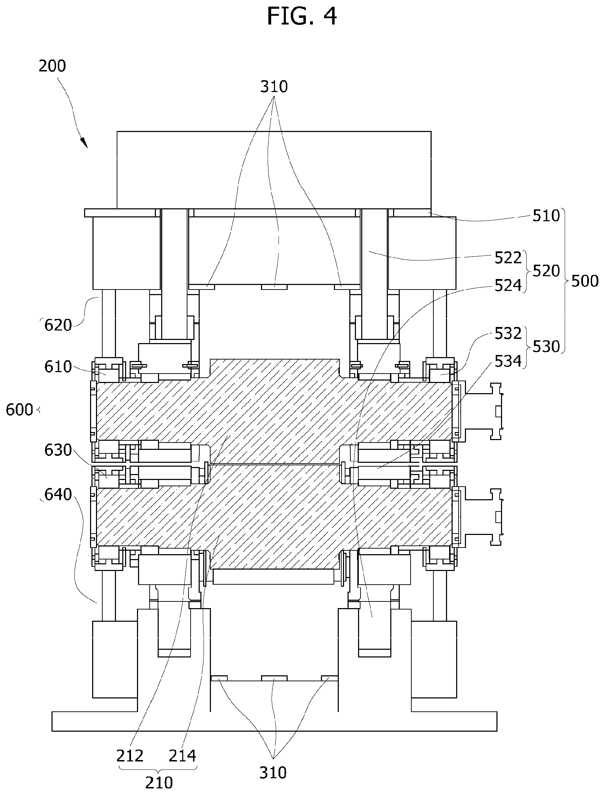

FIG. 1 is a schematic view illustrating a configuration of an electrode manufacturing device according to an embodiment of the present disclosure, and FIG. 2 is a schematic plan view illustrating the configuration of the electrode manufacturing device according to an embodiment of the present disclosure. FIG. 3 is a schematic perspective view illustrating a rolling part of the electrode manufacturing device according to an embodiment of the present disclosure, and FIG. 4 is a schematic cross-sectional view illustrating the rolling part of the electrode manufacturing device according to an embodiment of the present disclosure.

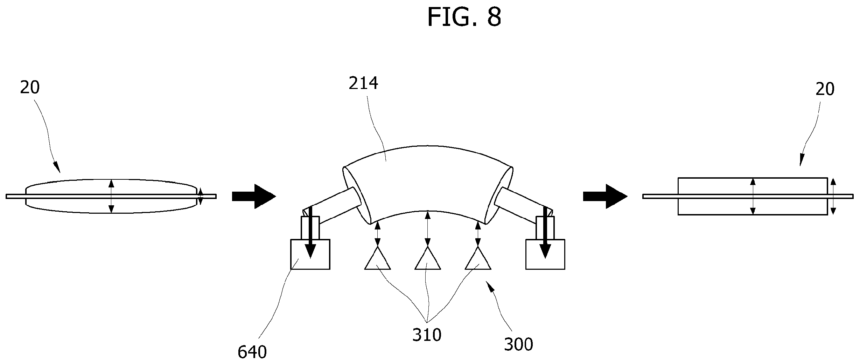

Referring to FIGS. 1 to 4, an electrode manufacturing device 10 according to an embodiment of the present disclosure may include a rolling part 200, a roundness measurement part 300 (see FIG. 8), a thickness measurement part 400, and a distance adjustment part 500.

An electrode plate 20 may be a current collector in the form of a sheet, film, or metal foil including a metal material such as copper. A coating agent is a material with which the sheet is coated and which forms a layer having a predetermined thickness, and for example, may be an electrode active material for a positive or negative electrode.

When the sheet is coated with the electrode active material such as a coating agent, the sheet may be divided into a coated portion which is a portion coated with the electrode active material and a non-coated portion which is a portion which is not coated with the coating agent.

The electrode plate 20 may be transferred by the transfer part 100. The transfer part 100 may include an unwinder unit 110 and a winder unit 120.

The unwinder unit 110 and the winder unit 120 may be sequentially disposed in a transfer direction of the electrode plate 20 (e.g., an X-axis direction). The unwinder unit 110 and the winder unit 120 may synchronize with each other and rotate in the same direction.

The electrode plate 20 may be wound around the unwinder unit 110, and the unwinder unit 110 may rotate to supply the electrode plate 20. The winder unit 120 may wind the electrode plate 20. Specifically, the winder unit 120 may wind the electrode plate 20 rolled by the rolling part 200.

In the present embodiment, a plurality of guide rollers 130 may be provided between the unwinder unit 110 and the winder unit 120.

The guide rollers 130 may function as components which transfer the electrode plate 20, and the electrode plate 20 may be transferred while maintaining a predetermined tensile force through an arrangement thereof.

The rolling part 200 may function as a component which rolls the electrode plate 20.

The rolling part 200 may be located between the unwinder unit 110 and the winder unit 120 to roll the electrode plate 20 which moves from the unwinder unit 110 toward the winder unit 120.

The rolling part 200 presses the electrode plate 20 which is coated with the active material, dried, and transferred in one direction (e.g., the X-axis direction). The rolling part 200 may include rolling rollers 210 which are disposed on and under the electrode plate 20 and provide a rolling force to the electrode plate 20.

The rolling rollers 210 are provided as a pair of rolling rollers 210. More specifically, the rolling rollers 210 include an upper rolling roller 212 (e.g., above the electrode plate 20 in the orientation of FIG. 1) and a lower rolling roller 214 disposed to face the upper rolling roller 212 (e.g., below the electrode plate 20).

Specifically, the rolling rollers 210 may be disposed on and under the electrode plate 20 in a direction perpendicular to the transfer direction of the electrode plate 20 (e.g., the Z-axis direction).

Each of the rolling rollers 210 may be formed in any of various shapes such as a rod or column shape extending in a width direction (e.g., in the Y-axis direction) of the electrode plate 20. The rolling rollers 210 according to an embodiment may be formed in a pair of cylindrical shapes, and the pair of rolling rollers 210 may rotate about rotation centers to move the electrode plate 20 disposed between the pair of rolling rollers 210 and is in contact with outer circumferential surfaces of the rolling rollers 210 in one direction (e.g., the X-axis direction).

In addition, the rolling rollers 210 may move the electrode plate 20 and press the electrode plate 20 in the direction perpendicular to the transfer direction (e.g., the Z-axis direction) at the same time as described above.

The roundness measurement part 300 (see FIG. 8) may function as a component which is provided on the rolling part 200 and measures roundness of each of the pair of rolling rollers 210.

As an example, the roundness measurement part 300 may include a plurality of displacement sensors 310 (see, e.g., FIG. 4), and the displacement sensors 310 may be provided to face a rolling gap of the rolling rollers 210.

The plurality of displacement sensors 310 may be disposed above the upper rolling roller 212 and under the lower rolling roller 214.

The displacement sensors 310 may be installed at locations at a left side, a central portion, and a right side of the rolling roller 210 in a longitudinal direction (e.g., in the Y-axis direction). This is to measure roundness of each of the central portion and both edges of the rolling roller 210.

The displacement sensors 310 measure whether the rolling roller 210 is close to a perfect circular shape and may be provided as precision measurement devices such as laser sensors or contact sensors that scan or measure a surface of the rolling roller 210 to collect roundness data to obtain a profile.

The roundness measurement part 300 may include an encoder 320 which measures a position of the rolling roller 210 in a circumferential direction. The encoder 320 may obtain data with each rotation of the rolling roller 210, and a roundness profile may be matched with a thickness profile of the electrode plate 20 which will be described below.

The thickness measurement part 400 may function as a component which is provided behind (e.g., farther in the positive X-axis direction than) the rolling part 200 and measures a thickness of the electrode plate 20. As an example, the thickness measurement part 400 may include a measurement roller 410 which supports a lower portion of the electrode plate 20 to guide the electrode plate 20 and a thickness sensor 420 which is provided above the measurement roller 410 and measures a thickness of the electrode plate 20 in the width direction.

The thickness sensor 420 may be installed above the measurement roller 410 to be movable in a left-right direction (e.g., in the Y-axis direction). The thickness sensor 420 may measure the thickness of the electrode plate 20 in the width direction while moving in the left-right direction to obtain a thickness profile and may transmit the thickness profile to a controller 540 which will be described below.

The thickness measurement of the electrode plate 20 performed by the thickness sensor 420 may be synchronized with a zero-point trigger signal of the encoder 320.

This is to accurately match a profile of roundness per rotation of the rolling roller 210 with a thickness profile of the electrode plate 20.

In the present embodiment, it is illustrated that the thickness sensor 420 is installed above the measurement roller 410 to be movable in the left-right direction, but the thickness sensor 420 may be provided as a plurality of thickness sensors 420 at a left side, a central portion, and a right side of the measurement roller 410 (e.g., along the Y-axis direction) to measure a thickness at each position.

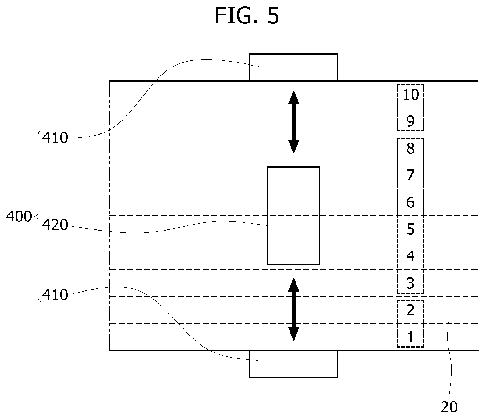

FIG. 5 is a view for describing thickness measurement of the electrode manufacturing device according to an embodiment of the present disclosure.

The thickness measurement will be specifically described with reference to FIG. 5. The electrode plate may be divided into a plurality of zones in the width direction, a thickness value in each zone may be measured, and a difference between an average value in edge zones (e.g., the far left and far right) of the electrode plate and an average value in central zones of the electrode plate may be measured. For example, the electrode plate 20 having a length of 60 mm may be virtually divided into ten zones, and a thickness value in each zone is obtained. A thickness profile may be obtained by measuring a difference between an average thickness value in first and second zones of a left edge and ninth and tenth zones of a right edge and an average thickness value in third, fourth, fifth, sixth, seventh, and eighth zones of a central portion.

The distance adjustment part 500 may function as a component which adjusts a distance between the rolling rollers 210 by comparing a measurement value of the thickness measurement part 400 and a measurement value of the roundness measurement part 300.

As an example, the distance adjustment part 500 may include an upper driver 522 which controls a position of the upper rolling roller 212 of the rolling rollers 210, a lower driver 524 which controls a position of the lower rolling roller 214 of the rolling rollers 210, and the controller 540 which matches a measurement value of the thickness measurement part 400 with a measurement value of the roundness measurement part 300 to control the upper driver 522 and the lower driver 524.

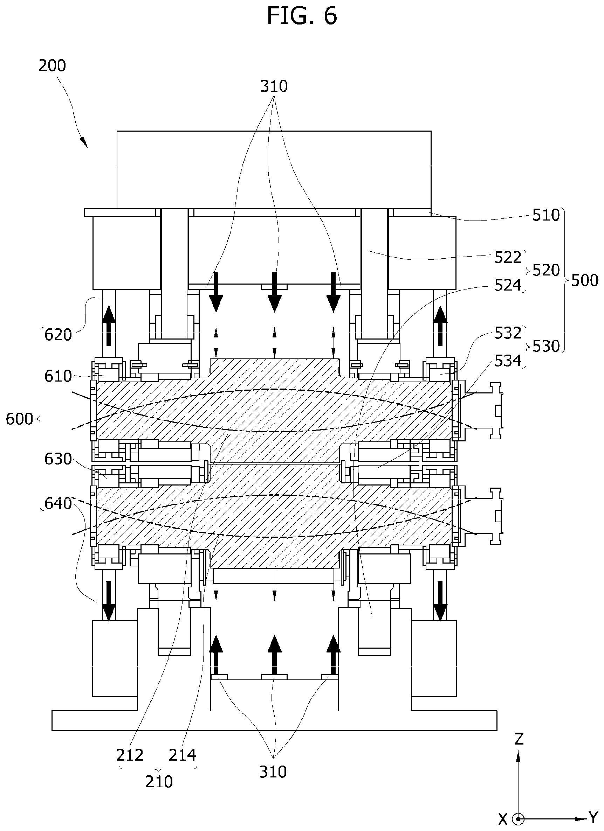

The distance adjustment part 500 may include a housing 510 (see FIG. 6), and the housing 510 may function as a component which supports the upper rolling roller 212 and the lower rolling roller 214.

**In** addition, the distance adjustment part 500 may include a first pressing frame 532 which is vertically movably provided in the housing 510 (e.g., vertically movable within the housing 510) and in which the upper rolling roller 212 is rotatably provided and a second pressing frame 534 which is provided under the first pressing frame 532 and in which the lower rolling roller 214 is rotatably provided.

The upper rolling roller 212 and the first pressing frame 532 are connected by a bearing and rotatably coupled, and the lower rolling roller 214 and the second pressing frame 534 are connected by a bearing and rotatably coupled.

The upper driver 522 may include a screw coupled to the first pressing frame 532 to move the first pressing frame 532 to change a position of the upper rolling roller 212. That is, a driving motor may be provided in an upper portion of the housing 510, and the first pressing frame 532 may be vertically moved by rotation of the screw by the driving motor to change the position of the upper rolling roller 212.

The lower driver 524 may include a pressing cylinder coupled to the second pressing frame 534 to move the second pressing frame 534 to change a position of the lower rolling roller 214. The pressing cylinder may be provided at both sides (e.g., left and right sides) of the lower rolling roller 214 to press the lower rolling roller 214 toward the upper rolling roller 212.

The distance adjustment part 500 may include a bending correction part 600 which adjusts bending of the upper rolling roller 212 and the lower rolling roller 214.

FIG. 6 is a view illustrating a bending action of the electrode manufacturing device according to an embodiment of the present disclosure.

Referring to FIGS. 1 to 6, the bending correction parts 600 according to the present embodiment may be provided on both edges (e.g., left and right edges) of the upper rolling roller 212 and both edges of the lower rolling roller 214 and may provide reverse pressures in directions opposite to a pressing direction of each of the upper rolling roller 212 and the lower rolling roller 214 (e.g., along the Z-axis direction).

As an example, the bending correction part 600 may include a first reverse pressure frame 610 provided on the edge of the upper rolling roller 212, a first reverse pressure cylinder 620 which is provided between the first reverse pressure frame 610 and the housing 510 and provides a reverse pressure in a direction (e.g., the Z-axis direction) opposite to a pressing direction (e.g., the negative Z-axis direction) of the upper driver 522, a second reverse pressure frame 630 provided on the edge of the lower rolling roller 214, and a second reverse pressure cylinder 640 which is provided between the second reverse pressure frame 630 and the housing 510 and provides a reverse pressure in a direction opposite to a pressing direction of the lower driver 524.

The first reverse pressure frame 610 may be provided at outermost sides of both edges of the upper rolling roller 212, and the second reverse pressure frame 630 may be provided at outermost sides of both edges of the lower rolling roller 214. **In** addition, the first reverse pressure cylinder 620 may be provided between an upper end of the housing 510 and the first reverse pressure frame 610 and may provide the reverse pressure in the direction opposite to the pressing direction by the upper driver 522, and the second reverse pressure cylinder 640 may be provided between a lower end of the housing 510 and the second reverse pressure frame 630 and may provide the reverse pressure in the direction opposite to the pressing direction by the lower driver 524.

The upper rolling roller 212 and the lower rolling roller 214 may be bent in crown shapes by the first reverse pressure cylinder 620 and the second reverse pressure cylinder 640.

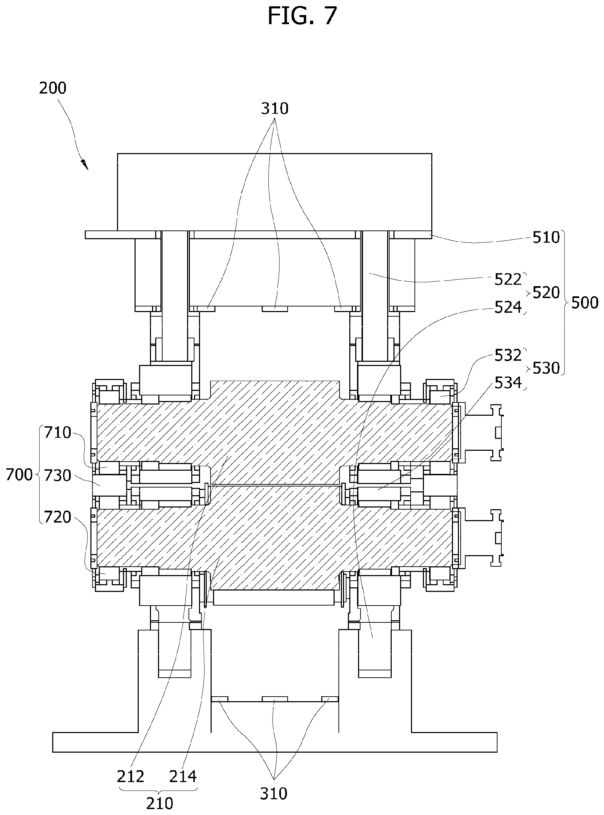

FIG. 7 is a schematic cross-sectional view illustrating a modified example of the bending correction part of the electrode manufacturing device according to an embodiment of the present disclosure.

Referring to FIG. 7, a bending correction part 700 according to the present embodiment may include a first reverse pressure frame 710 provided on an edge of an upper rolling roller 212, a second reverse pressure frame 720 provided on an edge of a lower rolling roller 214, and a reverse pressure cylinder 730 which is provided between the first reverse pressure frame 710 and the second reverse pressure frame 720 and provides pressing forces to the first reverse pressure frame 710 and the second reverse pressure frame 720 in directions opposite to each other.

That is, an upper driver 522 and a lower driver 524 may press the upper rolling roller 212 downward and press the lower rolling roller 214 upward, and the reverse pressure cylinder 730 may be provided between a first reverse pressure frame 610 and a second reverse pressure frame 630 and may vertically expand/contract the first reverse pressure frame 710 and the second reverse pressure frame 720 in both directions opposite to each other to provide reverse pressures in directions opposite to a pressing direction of each of the upper driver 522 and the lower driver 524.

FIG. 8 is a view for describing a change in shape of the electrode plate manufactured by the electrode manufacturing device according to an embodiment of the present disclosure.

Referring to FIG. 8, in general, due to a structure of the rolling part 200, since the upper driver 522 and the lower driver 524 press the edges of the upper rolling roller 212 and the lower rolling roller 214, respectively, to roll the electrode plate 20, an edge of the electrode plate 20 is formed to have a thickness which is smaller than a thickness of the central portion thereof (e.g., the electrode plate is thicker in the middle than at the edge). In order to compensate for this, the first reverse pressure cylinder 620 and the second reverse pressure cylinder 640 are provided at the outermost sides of the upper rolling roller 212 and the lower rolling roller 214 to provide reverse pressures in directions opposite to a pressing direction such that the upper rolling roller 212 and the lower rolling roller 214 have the crown shapes to allow the central portion and the edge of the electrode plate 20 to have a uniform thickness.

A method of manufacturing an electrode according to an embodiment of the present disclosure will be described below.

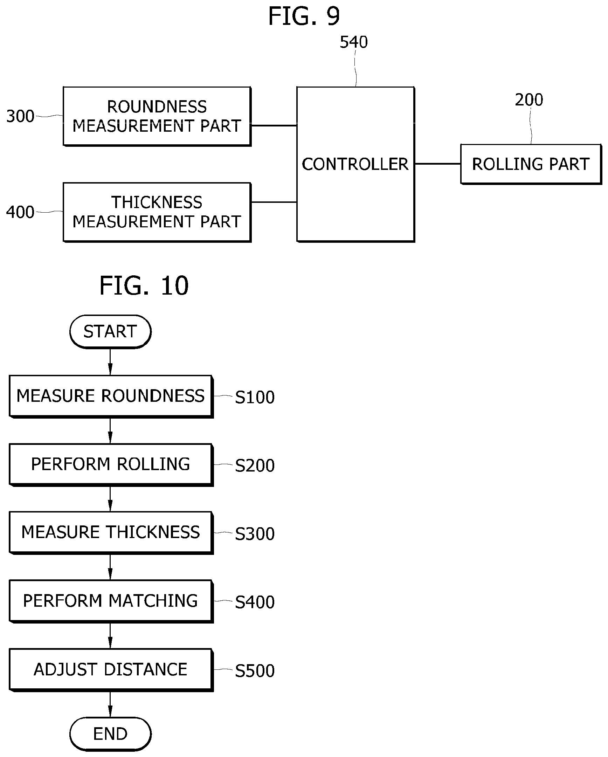

FIG. 9 is a configuration diagram for the method of manufacturing an electrode according to an embodiment of the present disclosure, and FIG. 10 is a flowchart illustrating the method of manufacturing an electrode according to an embodiment of the present disclosure.

Referring to FIGS. 1 to 10, the method of manufacturing an electrode according to an embodiment of the present disclosure may include a roundness measurement operation S100, a rolling operation S200, a thickness measurement operation S300, a matching operation S400, and a distance adjustment operation S500.

The electrode plate 20 transferred by the transfer part 100 including the unwinder unit 110 and the winder unit 120 is guided by a guide roller 130 and rolled by the rolling part 200.

The unwinder unit 110 and the winder unit 120 may synchronize with each other and rotate in the same direction, and the electrode plate 20 having a predetermined tensile force may be transferred.

First, the roundness measurement part 300 may measure roundness of the rolling roller 210 to obtain a profile (S100). The roundness measurement part 300 including the displacement sensors 310 installed at left sides, central portions, and right sides of the upper rolling roller 212 and the lower rolling roller 214 in a longitudinal direction measures surfaces of the upper rolling roller 212 and the lower rolling roller 214 and collects data to obtain the profile.

The roundness profile obtained as described above is transmitted to the controller 540.

After the roundness profile of the rolling roller 210 is obtained, the rolling operation S200 of rolling the electrode plate 20 is performed. The rolling operation S200 is performed by pressure of the upper rolling roller 212 and the lower rolling roller 214 vertically provided on the electrode plate 20.

More specifically, as an upper surface of the electrode plate 20 is pressed by the upper rolling roller 212 driven by the upper driver 522, and a lower surface of the electrode plate 20 is pressed by the lower rolling roller 214 driven by the lower driver 524, the electrode plate 20 may be transferred in one direction and pressed in the direction perpendicular to the transfer direction at the same time to be rolled.

Then, the thickness measurement operation S300 of measuring a thickness of the rolled electrode plate 20 is performed.

In the thickness measurement operation S300, the thickness measurement part 400 measures the thickness of the electrode plate 20 in the width direction and obtains a profile. The thickness measurement is performed by the thickness sensor 420 which reciprocates in the width direction of the electrode plate 20 passing through the measurement roller 410. That is, as illustrated in FIG. 2, the thickness sensor 420 may move in a longitudinal direction of the measurement roller 410 and in the left-right direction of the electrode plate 20 in the width direction, measure a thickness of the edge and a thickness of the central portion of the electrode plate 20, and obtain a thickness profile.

More specifically, the thickness measurement operation S300 may be synchronized with a zero-point trigger signal of the encoder 320 of the rolling roller 210. This is to obtain data with each rotation of the rolling roller 210, and the controller 540 may accurately match the roundness profile with the thickness profile.

In addition, in the thickness measurement, a thickness value in each zone of the electrode plate 20 divided into a plurality of zones in the width direction may be measured, and a difference between an average value in edge zones of the electrode plate 20 and an average value in central zones of the electrode plate 20 may be measured.

As illustrated in FIG. 5, the electrode plate 20 having a length of 60 mm is virtually divided into ten zones, and a thickness value in each zone is obtained. A thickness profile may be obtained by measuring an average thickness value in first and second zones of the left edge and ninth and tenth zones of the right edge and an average thickness value in third, fourth, fifth, sixth, seventh, and eighth zones of the central portion.

The thickness profile of the electrode plate 20 obtained as described above is transmitted to the controller 540.

After the thickness measurement operation S300 is performed, the matching operation S400 is performed. The matching operation S400 may be accomplished by the controller 540.

In the matching operation S400, a thickness measurement value of the electrode plate 20 and a roundness measurement value of the rolling roller 210 are compared, and a gap between the upper rolling roller 212 and the lower rolling roller 214 may be controlled and corrected on the basis of matching data.

After the matching operation S400 is performed, the distance adjustment operation S500 is performed. In the distance adjustment operation S500, after the thickness measurement value and the roundness measurement value of the rolling roller 210 are matched with each other, the rolling roller 210 may be bent on the basis of the matching data.

In the bending of the rolling roller 210, a force is applied to the rolling roller 210 in a direction opposite to a pressing direction of the rolling roller 210 to bend the rolling roller 210 in a crown shape, and a problem that a thickness of the edge is smaller than a thickness of the central portion of the electrode plate 20 can be solved.

More specifically, the bending of the rolling roller 210 may be performed by a driver 520 which is provided on both edges of the rolling roller 210 and presses the rolling roller 210 toward the electrode plate 20 and a reverse pressure cylinder which is provided outside the driver 520 and provides a hydraulic pressure force in a direction opposite to a pressing direction of the driver 520.

As illustrated in FIG. 4, the bending of the rolling roller 210 may be accomplished by the bending correction part 600.

As the first reverse pressure cylinder 620 provides a reverse pressure in the direction opposite to a pressing direction of the upper driver 522 to the first reverse pressure frame 610 provided outside the first pressing frame 532, the upper rolling roller 212 may be bent in the crown shape, and as the second reverse pressure cylinder 640 provides a reverse pressure in the direction opposite to a pressing direction of the lower driver 524 to the second reverse pressure frame 630 provided outside the second pressing frame 534, the lower rolling roller 214 may be bent in the crown shape.

Since the upper rolling roller 212 and the lower rolling roller 214 are bent in opposite directions to have crown shapes, as illustrated in FIG. 8, the problem that the thickness of the edge is smaller than the thickness of the central portion of the electrode plate 20 can be solved, and thus a difference in thickness of the electrode plate 20 in the width direction can be minimized.

As described above, when the rolling process for increasing the density of the coated portion after coating is performed, since roundness of the rolling roller 210 may be measured in advance, and a gap of the rolling roller 210 may be finely and repeatedly controlled over time on the basis of a profile generated in conjunction with thickness measurement data, a dispersion degree of the electrode plate 20 can be minimized, and thus a density level can be increased and uniformized.

Accordingly, defect generation can be prevented when cells (e.g., battery cells) are assembled in a can.

According to the present disclosure, when a rolling process for increasing a density of a coated portion after coating is performed, since roundness of each of rolling rollers is measured in advance, and a gap between the rolling rollers can be precisely and repeatedly controlled over time on the basis of a profile generated in conjunction with thickness measurement data of an electrode plate, a dispersion degree of the electrode plate can be minimized, and thus a density level can be increased and uniformized.

According to the present disclosure, since thicknesses of a central portion and an edge of an electrode plate can be uniformized, defect generation can be prevented when cells are assembled in a can.

In relation to a press process for increasing the density of a coated portion after coating, rolling is performed by pressing an end portion of a rolling roller due to a structure of a press, and in this case, there is a general problem that a thin edge is formed.

In addition, a method of obtaining a sample after the rolling, manually performing measurement on the sample, and inputting a correction value has a problem that productivity is reduced, and real-time monitoring is difficult.

The present disclosure is directed to providing an electrode manufacturing device and a method of manufacturing an electrode using the same, which are capable of performing feedback control for correcting a thickness of an electrode plate rolled on the basis of data measured when a rolling process for increasing the density of a coated portion after coating is performed, which minimizes a dispersion degree of the electrode plate, increases the density, and allows the density to be uniformized.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those of ordinary skill in the art on the basis of the embodiments.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of ordinary skill in the art that various changes in form and details may be made without departing from the spirit and scope of the present invention as set forth in the following claims.

## Claims

1. An electrode manufacturing device (10), comprising:
a rolling part (200) comprising a pair of rolling rollers (210) and configured to roll an electrode plate (20) and move the electrode plate (20) in a positive X-axis direction; the rolling rollers (210) being further configured to press the electrode plate (20) in a Z-axis direction perpendicular to the X-axis;
a roundness measurement part (300) on the rolling part (200), the roundness measurement part (300) configured to measure a roundness of each of a pair of rolling rollers (210);
a thickness measurement part (400) with respect to the positive X-axis direction behind the rolling part (200), the thickness measurement part (400) configured to measure a thickness of the electrode plate (20); and
a distance adjustment part (500) configured to compare a measurement value of the thickness measurement part (400) with a measurement value of the roundness measurement part (300) and further configured to adjust a distance between the pair of rolling rollers (210).

2. The electrode manufacturing device (10) as claimed in claim 1, wherein:
the roundness measurement part (300) includes a plurality of displacement sensors (310); and
the plurality of displacement sensors (310) face a rolling gap between the pair of rolling rollers (210).

3. The electrode manufacturing device (10) as claimed in claim 2, wherein the plurality of displacement sensors (310) are installed at a left side, a central portion, and a right side of each of the pair of rolling rollers (210) in a Y-axis direction thereof, the Y-axis being perpendicular to the X-axis and Z-axis.

4. The electrode manufacturing device (10) according to any of the previous claims, wherein the roundness measurement part (300) includes an encoder (320) configured to measure a position of each of the pair of rolling rollers (210) in a circumferential direction thereof.

5. The electrode manufacturing device (10) according to any of the previous claims, wherein the thickness measurement part (400) includes:
a measurement roller (410) supporting with regard to the Z-axis direction a lower portion of the electrode plate (20), the measurement roller (410) configured to guide the electrode plate (20); and
a thickness sensor (420) in the Z-axis direction above the measurement roller (410), the thickness sensor (420) configured to measure a left-right thickness of the electrode plate (20) in the Y-axis direction thereof.

6. The electrode manufacturing device (10) as claimed in claim 5, wherein the thickness sensor (420) is movable in the Y-axis direction of the electrode plate (20).

7. The electrode manufacturing device (10) according to any of the previous claims, wherein the distance adjustment part (500) includes:
an upper driver (522) configured to control a position of an upper rolling roller (212) of the pair of rolling rollers (210);
a lower driver (524) configured to control a position of a lower rolling roller (214) of the pair of rolling rollers (210); and
a controller (540) configured to match a measurement value of the thickness measurement part (400) with a measurement value of the roundness measurement part (300) to control the upper driver (522) and the lower driver (524).

8. The electrode manufacturing device (10) as claimed in claim 7, wherein the distance adjustment part (500) includes:
a housing (510);
a first pressing frame (532) movable in the Z-axis direction in the housing (510), the upper rolling roller (212) being rotatable on the first pressing frame (532); and
a second pressing frame (534) with regard to the Z-axis direction under the first pressing frame (532), the lower rolling roller (214) being rotatable on the second pressing frame (534).

9. The electrode manufacturing device (10) as claimed in claim 8, wherein the upper driver (522) includes a screw coupled to the first pressing frame (532) to move the first pressing frame (532) to change the position of the upper rolling roller (212).

10. The electrode manufacturing device (10) as claimed in claim 8 or 9, wherein the lower driver (524) includes a pressing cylinder coupled to the second pressing frame (534) to move the second pressing frame (534) to change the position of the lower rolling roller (214).

11. The electrode manufacturing device (10) as claimed in any of claims 7 to 10, wherein the distance adjustment part (500) includes a bending correction part (600, 700) configured to adjust bending of the upper rolling roller (212) and the lower rolling roller (214).

12. The electrode manufacturing device (10) as claimed in claim 11, wherein the bending correction part (600, 700) is at both edges of the upper rolling roller (212) and both edges of the lower rolling roller (214), the bending correction part (600) being configured to provide a reverse pressure in a direction opposite to a pressing direction of each of the upper rolling roller (212) and the lower rolling roller (214), along the Z-axis direction.

13. The electrode manufacturing device (10) as claimed in claim 12, wherein the bending correction part (600) includes:
a first reverse pressure frame (610) on an edge of the upper rolling roller (212);
a first reverse pressure cylinder (620) between the first reverse pressure frame (610) and the housing (510), the first reverse pressure cylinder (620) configured to provide a reverse pressure in a direction opposite to a pressing direction of the upper driver (522) along the Z-axis direction;
a second reverse pressure frame (630) provided on an edge of the lower rolling roller (214); and
a second reverse pressure cylinder (640) between the second reverse pressure frame (630) and the housing (510), the second reverse pressure cylinder (640) configured to provide a reverse pressure in a direction opposite to a pressing direction of the lower driver (524) along the Z-axis direction.

14. The electrode manufacturing device (10) as claimed in claim 12, wherein the bending correction part (700) includes:
a first reverse pressure frame (710) on an edge of the upper rolling roller (212);
a second reverse pressure frame (720) on an edge of the lower rolling roller (214); and
a reverse pressure cylinder (730) between the first reverse pressure frame (710) and the second reverse pressure frame (720), the reverse pressure cylinder (730) configured to provide a pressing force to the first reverse pressure frame (710) and the second reverse pressure frame (720) in directions opposite to each other.

15. A method of manufacturing an electrode, the method preferably being performed by an electrode manufacturing device (10) configured according to any of the preceding claims, the method comprising the steps:
measuring a roundness of a rolling roller (210) to obtain a profile;
rolling, by the rolling roller (210), an electrode plate (20), resulting in a rolled electrode plate (20);
measuring a thickness of the rolled electrode plate (20);
comparing a thickness measurement value of the electrode plate (20) with a roundness measurement value of the rolling roller (210); and
after comparing the thickness of the electrode plate (20), adjusting a gap of the rolling roller (210) based on a difference value.
